# EUROPEAN PATENT APPLICATION

(11) **EP 1 739 099 A1**
(43) Date of publication of application: **03.01.2007**
(21) Application number: 05728777.3
(22) Date of filing: 05.04.2005
(51) Int. Cl.: C08F 2/26, C08F 2/38, C08F 214/22, C08F 214/26

(54) **METHOD FOR PRODUCING FLUORINE-CONTAINING ELASTOMER POLYMER**

(30) Priority: 07.04.2004 JP 2004113683; 16.09.2004 JP 2004270480
(71) Applicant: DAIKIN INDUSTRIES, LTD., Osaka-shi, Osaka 530-8323 (JP)
(72) Inventor: TSUDA, Nobuhiko, Daikin Industries, Ltd., Settsu-shi, Osaka 566-8585 (JP); TANAKA, Yoshiki, Daikin Industries, Ltd., Settsu-shi, Osaka 566-8585 (JP); MORITA, Shigeru, Daikin Industries, Ltd., Settsu-shi, Osaka 566-8585 (JP); SAWADA, Yasuhiko, Daikin Industries, Ltd., Settsu-shi, Osaka 566-8585 (JP); SHIMIZU, Tetsuo, Daikin Industries, Ltd., Settsu-shi, Osaka 566-8585 (JP)
(74) Representative: HOFFMANN EITLE
(86) International application number: PCT/JP2005/006677
(87) International publication number: WO 2005/097835

(57) **Abstract**

The present invention provides a method of producing an elastomeric fluoropolymer excellent in productivity and crosslinkability. The present invention is a method of producing an elastomeric fluoropolymer comprising polymerizing a fluoromonomer in an aqueous medium in the presence of a vinyl group-containing fluorinated emulsifier and a chain transfer agent, wherein the vinyl group-containing fluorinated emulsifier is a compound having a radical polymerizable unsaturated bond and a hydrophilic group within the molecule thereof.

## Description

### TECHNICAL FIELD

The present invention relates to a method of producing an elastomeric fluoropolymer.

### BACKGROUND ART

In carrying out the polymerization in an aqueous medium for obtaining fluoroelastomers, fluorine-containing surfactants are often used as emulsifiers in the art, and the fluoroelastomers obtained from such polymerization generally contain residual fluorine-containing surfactants. The occurrence of residual fluorine-containing surfactants causes a problem, namely disturbs the vulcanization or curing step, which is a step in the process of molding.

A known method of producing a fluoroelastomer comprises polymerizing a fluoromonomer in an aqueous medium with a pH of 5 to 10 in the presence of CF₂=CFO-(CF₂)ₛ-COOT (in which s is an integer of 1 to 7 and T is an alkali metal or the like) (cf. e.g. Patent Document 1: Japanese Kokoku Publication S61-33848). However, Patent Document 1 gives no description of the possibility of using a chain transfer agent in common use for the purpose of adjusting the molecular weight of a fluoroelastomer, which influences the moldability/processability of the rubber.

As a method of producing fluoroelastomers, there is known the method comprising producing aqueous dispersions of a vinylidene fluoride [VDF]-based copolymer in the presence of CF₂=CF-(CF₂)t-Y (wherein t is an integer of 1 to 10 and Y is a carboxyl group) (cf. e.g. Patent Document 2: Japanese Kokai Publication H08-67795). However, Patent Document 2 gives no suggestion about the possibility of carrying out the polymerization in a stable manner even in the presence of a chain transfer agent. Further, while the document describes the seed polymerization of a fluorine-free monomer(s) in the presence of that VDF-based copolymer aqueous dispersion, it does not describe the seed polymerization of a fluoromonomer(s).

For producing fluoroelastomers, a multistage polymerization method is known which comprises carrying out the first stage of polymerization in an aqueous medium in the presence of an emulsifier in an amount of not smaller than 0.5% by weight relative to the aqueous medium, then diluting the thus-obtained emulsion comprising seed particles, adding a monomer and carrying out the second stage of polymerization and so forth (cf. e.g. Patent Document 3: WO 00/001741). By carrying out the polymerization in multiple stages according to this method, it is possible to improve the production efficiency while reducing the amount of the emulsifier to be used; however, a certain amount of the emulsifier remains. Further, Patent Document 3 does not give any suggestion about carrying out this multistage polymerization in the presence of a vinyl group-containing fluorinated emulsifier.

### DISCLOSURE OF INVENTION

### PROBLEMS WHICH THE INVENTION IS TO SOLVE

In view of the above-discussed state of the art, it is an object of the present invention to provide a method of producing an elastomeric fluoropolymer excellent in productivity and crosslinkability.

### MEANS FOR SOLVING THE PROBLEMS

The present invention is a method of producing an elastomeric fluoropolymer comprising polymerizing a fluoromonomer in an aqueous medium in the presence of a vinyl group-containing fluorinated emulsifier and a chain transfer agent, wherein the vinyl group-containing fluorinated emulsifier is a compound having a radical polymerizable unsaturated bond and a hydrophilic group within the molecule thereof.

The present invention is a method of producing an elastomeric fluoropolymer comprising polymerizing a fluoromonomer in an aqueous medium in the presence of a vinyl group-containing fluorinated emulsifier and a chain transfer agent, wherein the vinyl group-containing fluorinated emulsifier is a vinyl group-containing fluorinated compound (I) represented by the general formula (I) :

CF₂=CF-(CF₂)ₐ-Y (I)

[wherein a represents an integer of 1 to 10 and Y represents -SO₃M or -COOM in which M represents H, NH₄ or an alkali metal], a vinyl group-containing fluorinated compound (II) represented by the general formula (II):

CF₂=CF-(CF₂C(CF₃)F)_{b}-Y (II)

[wherein b represents an integer of 1 to 5 and Y represents -SO₃M or -COOM in which M represents H, NH₄ or an alkali metal], a vinyl group-containing fluorinated compound (III) represented by the general formula (III):

CF₂=CFO-(CF₂)_{c}-Y (III)

[wherein c represents an integer of 1 to 10 and Y represents -SO₃M or -COOM in which M represents H, NH₄ or an alkali metal], a vinyl group-containing fluorinated compound (IV) represented by the general formula (IV):

CF₂=CF(CF₂)_{d}-O-(CF₂CFXO)ₑ-(CF₂)_{f}-Y (IV)

[wherein X represents -F or -CF₃, d represents an integer of 0 to 2, e represents an integer of 1 to 10, f represents an integer of 1 to 3 and Y represents -SO₃M or -COOM in which M represents H, NH₄ or an alkali metal], a vinyl group-containing fluorinated compound (V) represented by the general formula (V):

CH₂=CFCF₂O-(CF(CF₃)CF₂O)_{g}-CF(CF₃)-Y (V)

[wherein g represents an integer of 0 to 10 and Y represents -SO₃M or -COOM in which M represents H, NH₄ or an alkali metal], a vinyl group-containing fluorinated compound (VI) represented by the general formula (VI):

CF₂=CF(CF₂)ₕO-(CF(CF₃)CF₂O)ᵢ-CF(CF₃)-Y (VI)

[wherein h represents an integer of 1 to 6, i represents an integer of 1 to 10 and Y represents - SO₃M or -COOM in which M represents H, NH₄ or an alkali metal], a vinyl group-containing fluorinated compound (VII) represented by the general formula (VII) :

CH₂=CH(CF₂)ₚ₁-Y (VII)

[wherein p1 represents an integer of 1 to 10 and Y represents -SO₃M or -COOM in which M represents H, NH₄ or an alkali metal] and/or a vinyl group-containing fluorinated compound (VIII) represented by the general formula (VIII):

CF₂=CFO-(CH₂)_{q}-(CF₂)ₚ₂-Y (VIII)

[wherein q represents an integer of 1 to 4, p2 represents an integer of 1 to 10 and Y represents - SO₃M or -COOM in which M represents H, NH₄ or an alkali metal].

The present invention is an elastomeric fluoropolymer aqueous dispersion which comprises a particle comprising an elastomeric fluoropolymer dispersed in an aqueous medium, wherein the elastomeric fluoropolymer is an elastomeric fluoropolymer produced by the above-mentioned method, the elastomeric fluoropolymer aqueous dispersion contains a vinyl group-containing fluorinated emulsifier or does not contain any vinyl group-containing fluorinated emulsifier and the content of the vinyl group-containing fluorinated emulsifier is lower than 1000 ppm relative to the elastomeric fluoropolymer aqueous dispersion.

In the following, the present invention is described in detail.

Referring to the method of producing an elastomeric fluoropolymer of the invention, the "elastomeric fluoropolymer" means a noncrystalline fluoropolymer having rubber elasticity. The above fluoropolymer is a polymer having a fluorine atom content of at least 58% by mass, preferably 64% by mass, and it may be a partially fluorinated polymer or a perfluoropolymer.

The elastomeric fluoropolymer has 30 to 80% by mass of the comonomer unit of the first monomer.

The term "first monomer" as used herein means vinylidene fluoride [VDF] or tetrafluoroethylene [TFE] constituting the comonomer unit that is the greatest majority among all comonomer units in the molecular structure of the elastomeric fluoropolymer. Among the elastomeric fluoropolymers mentioned above, those copolymers derived from the first monomer VDF are sometimes referred to as "VDF-based copolymers", and those polymers derived from the first monomer TFE as "TFE-based copolymers".

In the present specification, each comonomer unit mentioned above is a part of the molecular structure of the elastomeric fluoropolymer and means the portion derived from the corresponding monomer. For example, the VDF unit is a part of the molecular structure of the VDF-based copolymer and is the VDF-derived segment and is represented by -(CH₂-CF₂)-. The above-mentioned "all comonomer units" are all monomer-derived portions in the molecular structure of the elastomeric fluoropolymer.

The contents of the above-mentioned comonomer units can be determined by F¹⁹-NMR measurements.

In the elastomeric fluoropolymer mentioned above, the units derived from the monomer(s) other than the first monomer and involved in the copolymerization may be units derived from only one of the monomers copolymerizable with the first monomer or may be units derived from two or more monomers copolymerizable with the first monomer.

The monomer copolymerizable with the first monomer is, for example, a fluoroolefin, a fluorine-containing vinyl ether or an olefin hydrocarbon.

The fluoroolefin is not particularly restricted but includes, among others, hexafluoropropylene [HFP], tetrafluoroethylene [TFE], 1,2,3,3,3-pentafluoropropene [1-HPFP], chlorotrifluoroethylene [CTFE] and vinyl fluoride [VF].

The fluorine-containing vinyl ether is not particularly restricted but includes perfluoro(alkyl vinyl ether) species.

Preferred as the perfluoro(alkyl vinyl ether) [PAVE] are compounds represented by the formula CF₂=CFO(Rf^{a}O)ₙ(Rf^{b}O)ₘRf^{c} [in which Rf^{a} and Rf^{b} are the same or different and each is a straight or branched perfluoroalkylene group containing 2 to 6 carbon atoms, m and n each independently is an integer of 0 to 10 and Rf^{c} is a perfluoroalkyl group containing 1 to 6 carbon atoms].

More preferred as the above-mentioned PAVE are compounds represented by the formula CF₂=CFO(CF₂CFXO)ᵣRf^{d} [in which X is -F or -CF₃, r is an integer of 0 to 5 and Rf^{d} is a perfluoroalkyl group containing 1 to 6 carbon atoms].

The above-mentioned PAVE is preferably perfluoro(methyl vinyl ether) [PMVE], perfluoro(ethyl vinyl ether) [PEVE] or perfluoro(propyl vinyl ether) [PPVE].

The above-mentioned PAVE is preferably a compound represented by the formula CF₂=CFO[(CF₂)ᵤCF₂CFZ¹O]ᵥRf^{e} [in which Rf^{e} is a perfluoroalkyl group containing 1 to 6 carbon atoms, u is an integer of 0 or 1, v is an integer of 0 to 5 and Z¹ is -F or -CF₃].

The above-mentioned group Rf^{e} is preferably - C₃F₇, the integer u is preferably 0 and the integer v is preferably 1.

The above-mentioned PAVE is preferably a compound represented by the formula CF₂=CFO[(CF₂CF(CF₃)O)ₘ(CF₂CF₂CF₂O)(CF₂)_{y}]C_{z}F_{2z+1} [in which m and n each independently is an integer of 0 to 10, y is an integer of 0 to 3 and z is an integer of 1 to 5].

Preferably, the above-mentioned integers m and n each independently is 0 or 1, and the integer z is preferably 1.

The above-mentioned PAVE is preferably a compound represented by the formula CF₂=CFOCF₂CF(CF₃)O(CF₃O)_{w}CₓF₂ₓ₊₁ [in which w is an integer of 1 to 5 and x is an integer of 1 to 3].

The integer x mentioned above is preferably 1.

When the elastomeric fluoropolymer mentioned above contains PAVE units, the PAVE unit content is preferably 20 to 70% by mass.

When the elastomeric fluoropolymer contains PMVE units, the PMVE unit content is preferably 30 to 55% by mass.

The hydrocarbon olefin mentioned above is not particularly restricted but may be ethylene or propene, for instance, and propene is preferred.

When the above-mentioned elastomeric fluoropolymer contains hydrocarbon olefin units, the hydrocarbon olefin unit content is preferably 4 to 20% by mass.

The elastomeric fluoropolymer is not particularly restricted provided that the fluorine atom content is at least 58% by mass. Thus, there may be mentioned fluoropolymers producible by emulsion polymerization, including, among others, TFE/perfluoro(vinyl ether)-based copolymers, VdF/HFP-based copolymers, VdF/CTFE-based copolymers, VdF/HFP/TFE-based copolymers, VdF/CTFE/TFE-based copolymers, TFE/propylene-based copolymers, TFE/propylene/VdF-based copolymers, ethylene/HFP-based copolymers and like fluorocopolymers.

The elastomeric fluoropolymer is preferably a VDF-based copolymer or a TFE-based copolymer. The TFE-based copolymer is preferably a TFE/propylene-based copolymer or a TFE/perfluoro(vinyl ether)-based copolymer.

The VDF-based copolymer includes, among others, VDF/HFP copolymers, VDF/HFP/TFE copolymers, VDF/HFP/TFE/4-bromo-3,3,4,4-tetrafluorobutene-1 copolymers, VDF/HFP/TFE/4-iodo-3,3,4,4-tetrafluorobutene-1 copolymers, VDF/PMVE/TFE/4-bromo-3,3,4,4-tetrafluorobutene-1 copolymers, VDF/PMVE/TFE/4-iodo-3,3,4,4-tetrafluorobutene-1 copolymers and VDF/PMVE/TFE/1,1,3,3,3-pentafluoropropene copolymers.

The TFE/propylene-based copolymer is, for example, a TFE/propylene copolymer.

The TFE/perfluoro(vinyl ether)-based copolymer includes, among others, TFE/PMVE/ethylene copolymers, TFE/PMVE/ethylene/4-bromo-3,3,4,4-tetrafluorobutene-1 copolymers, TFE/PMVE/ethylene/4-iodo-3,3,4,4-tetrafluorobutene-1 copolymers, TFE/PMVE copolymers, TFE/PMVE/perfluoro(8-cyano-5-methyl-3,6-dioxa-1-octene) copolymers, TFE/PMVE/4-iodo-3,3,4,4-tetrafluorobutene-1 copolymers and TFE/PMVE/perfluoro(2-phenoxypropyl vinyl ether) copolymers.

The method of producing an elastomeric fluoropolymer of the invention comprises polymerizing a fluoromonomer(s) in an aqueous medium in the presence of a vinyl group-containing fluorinated emulsifier and a chain transfer agent.

The vinyl group-containing fluorinated emulsifier is a compound having a radical polymerizable unsaturated bond and a hydrophilic group within the molecule.

The compound having a radical polymerizable unsaturated bond and a hydrophilic group within the molecule is preferably a vinyl group-containing fluorinated compound (1) represented by the general formula (1):

CR¹R²=CR³(CR⁴R⁵)ⱼ-(O)ₖ-R-Y (1)

[wherein R¹, R², R³, R⁴ and R⁵ are the same or different and each represents a perfluoroalkyl group (which may optionally be substituted by H), H, F, Cl, Br or I, R represents a straight or branched fluoroalkylene group resulting from substitution of part or all of H atoms of the corresponding alkylene group by F, which may contain oxygen [-O-] atom in the main chain thereof, j represents an integer of 0 to 6, k represents an integer of 0 or 1, and Y represents a hydrophilic group].

In the above general formula (1), the above-mentioned R¹, R², R³, R⁴ and R⁵, which may be the same or different, each preferably is H or F.

In the above general formula (1), the above-mentioned R, which may contain oxygen [-O-] atom in the main chain thereof, is preferably a straight or branched perfluoroalkylene group containing 1 to 23 carbon atoms within the main chain thereof. When it contains oxygen [-0-] atom in the main chain thereof, the oxygen atom is preferably an oxygen atom constituting a polyoxyalkylene group composed of 1 to 10 oxyalkylene units (each preferably containing 2 or 3 carbon atoms). When it is branched, the side chain is preferably -CF₃.

In the above general formula (1), the integer j is preferably 0 to 2.

In the above general formula (1), the hydrophilic group represented by Y is preferably - SO₃M or -COOM (in which M represents H, NH₄ or an alkali metal).

The vinyl group-containing fluorinated emulsifier mentioned above preferably is a vinyl group-containing fluorinated compound (I), a vinyl group-containing fluorinated compound (II), a vinyl group-containing fluorinated compound (III), a vinyl group-containing fluorinated compound (IV), a vinyl group-containing fluorinated compound (V), a vinyl group-containing fluorinated compound (VI), a vinyl group-containing fluorinated compound (VII) and/or a vinyl group-containing fluorinated compound (VIII).

The vinyl group-containing fluorinated emulsifier may comprise a single species or mutually differing two or more species each independently selected from among the vinyl group-containing fluorinated compounds (I) to (VIII).

The vinyl group-containing fluorinated compound (I) is represented by the general formula (I) :

CF₂=CF-(CF₂)ₐ-Y (I)

[wherein a represents an integer of 1 to 10 and Y represents -SO₃M or -COOM in which M represents H, NH₄ or an alkali metal].

In the above general formula (I), the integer a is preferably not greater than 5, more preferably not greater than 2. The above group Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (I), there may be mentioned, among others, the following:
CF₂=CF-CF₂-COOH, CF₂=CF-CF₂-COONH₄,
CF₂=CF-CF₂CF₂-COOH, CF₂=CF-CF₂-COONH₄,
CF₂=CF-CF₂-SO₃H, CF₂=CF-CF₂-SO₃Na,
CF₂=CF-CF₂CF₂-SO₃H and CF₂=CF-CF₂CF₂-SO₃Na.
Among them, CF₂=CFCF₂-COONH₄ is preferred from the improved dispersion stability viewpoint.

The vinyl group-containing fluorinated compound (II) is represented by the general formula (II) :

CF₂=CF-(CF₂C(CF₃)F)_{b}-Y (II)

[wherein b represents an integer of 1 to 5 and Y represents -SO₃M or -COOM in which M represents H, NH₉ or an alkali metal] .

In the above general formula (II), the integer b is preferably not greater than 3 from the emulsifying ability viewpoint. Y is preferably - COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (II), there may be mentioned, among others, the following: 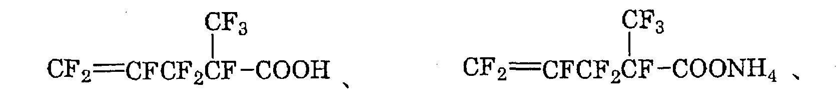 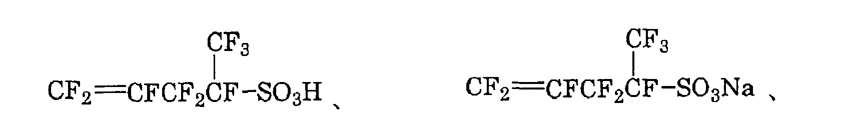 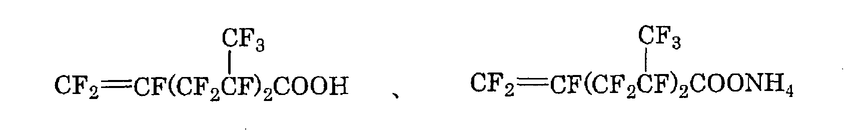 Preferred among them from the improved dispersion stability viewpoint are the following:

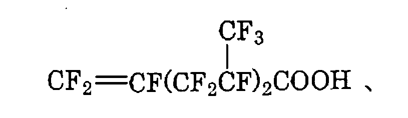

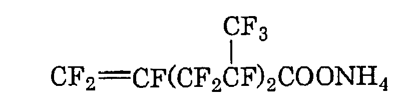

The vinyl group-containing fluorinated compound (III) is represented by the general formula (III):

CF₂=CFO-(CF₂)_{c}-Y (III)

[wherein c represents an integer of 1 to 10 and Y represents -SO₃M or -COOM in which M represents H, NH₄ or an alkali metal] .

In the above general formula (III), the integer c is preferably not greater than 5 from the water solubility viewpoint, Y is preferably -COOM from the proper water solubility and surfactant activity viewpoint, and M is preferably H or NH₄ from the dispersion stability improvement viewpoint.

As the vinyl group-containing fluorinated compound (III), there may be mentioned, among others, the following:
CF₂=CF-OCF₂-COOH,
CF₂=CF-OCF₂-COONH₄,
CF₂=CF-OCF₂CF₂-COOH,
CF₂=CF-OCF₂CF₂-COONH₄,
CF₂=CF-OCF₂CF₂CF₂-COOH and
CF₂-CF-OCF₂CF₂CF₂-COONH₄.
Among them, CF₂=CF-OCF₂CF₂CF₂-COONH₄ is preferred from the better dispersion stability viewpoint.

The vinyl group-containing fluorinated compound (IV) is represented by the general formula (IV) :

CF₂=CF(CF₂)_{d}-O-(CF₂CFXO)ₑ-(CF₂)_{f}-Y (IV)

[wherein X represents -F or -CF₃, d represents an integer of 0 to 2, e represents an integer of 1 to 10, f represents an integer of 1 to 3 and Y represents -SO₃M or -COOM in which M represents H, NH₄ or an alkali metal].

In the above general formula (IV), the moiety X is preferably -CF₃ from the surfactant activity viewpoint, the integer d is preferably 0 (zero) from the copolymerizability viewpoint, the integer e is preferably not greater than 5 from the water solubility viewpoint, the group Y is preferably - COOM from the proper water solubility and surfactant activity viewpoint, the integer f is preferably not greater than 2, and M is preferably H or NH₄.

As the vinyl group-containing fluorinated compound (IV), there may be mentioned, among others, the following:
CF₂=CF-O-CF₂CF(CF₃)-OCF₂-COOH,
CF₂=CF-O-CF₂CF(CF₃)-OCF₂-COONH₄,
CF₂=CF-O-CF₂CF(CF₃)-OCF₂SO₃H,
CF₂=CF-O-CF₂CF(CF₃)-OCF₂SO₃Na,
CF₂=CF-O-CF₂CF(CF₃)-OCF₂CF₂-COOH,
CF₂=CF-O-CF₂CF(CF₃)-OCF₂CF₂-COONH₄,
CF₂=CF-O-CF₂CF(CF₃)-OCF₂CF₂SO₃H,
CF₂=CF-O-CF₂CF(CF₃)-OCF₂CF₂SO₃Na,
CF₂=CF-CF₂-O-CF₂CF(CF₃)-OCF₂CF₂-COOH,
CF₂=CF-CF₂-O-CF₂CF(CF₃)-OCF₂CF₂-COONH₄,
CF₂=CF-CF₂- O-CF₂CF(CF₃)-OCF₂CF₂SO₃H ,
CF₂=CF-CF₂-O-CF₂CF(CF₃)-OCF₂CF₂SO₃Na ,
CF₂=CF-CF₂-CF₂-O-CF₂CF(CF₃)-OCF₂CF₂-COOH ,
CF₂=CF-CF₂-CF₂-O-CF₂CF(CF₃)-OCF₂CF₂-COONH₄ ,
CF₂=CF-CF₂-CF₂-O-CF₂CF(CF₃)-OCF₂CF₂SO₃H .
CF₂=CF-CF₂-CF₂-O-CF₂CF(CF₃)-OCF₂CF₂SO₃Na
Preferred among them from the better dispersion stability viewpoint are:
CF₂=CF-O-CF₂CF(CF₃)-OCF₂-COOH,
CF₂=CF-O-CF₂CF(CF₃)-OCF₂-COONH₄,
CF₂=CF-O-CF₂CF(CF₃)-OCF₂SO₃H,
CF₂=CF-O-CF₂CF(CF₃)-OCF₂SO₃Na,
CF₂=CF-O-CF₂CF(CF₃)-OCF₂CF₂-COOH,
CF₂=CF-O-CF₂CF(CF₃)-OCF₂CF₂-COONH₄,
CF₂=CF-O-CF₂CF(CF₃)-OCF₂CF₂SO₃H,
CF₂=CF-O-CF₂CF(CF₃)-OCF₂CF₂SO₃Na,
CF₂=CF-CF₂-O-CF₂CF(CF₃)-OCF₂CF₂-COOH,
CF₂=CF-CF₂-O-CF₂CF(CF₃)-OCF₂CF₂-COONH₄,
CF₂=CF-CF₂-O-CF₂CF(CF₃)-OCF₂CF₂-SO₃H,
CF₂=CF-CF₂-O-CF₂CF(CF₃)-OCF₂CF₂-SO₃Na

The vinyl group-containing fluorinated compound (V) is represented by the general formula (V) :

CH₂=CFCF₂O-(CF(CF₃)CF₂O)_{g}-CF(CF₃)-Y (V)

[wherein g represents an integer of 0 or 1 to 10 and Y represents -SO₃M or -COOM in which M represents H, NH₄ or an alkali metal].

In the above general formula (V), the integer g is preferably 0 or 1 to 5, more preferably 0 to 2, still more preferably 0 or 1, from the emulsifying activity viewpoint, Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (V), there may be mentioned, among others, the following: 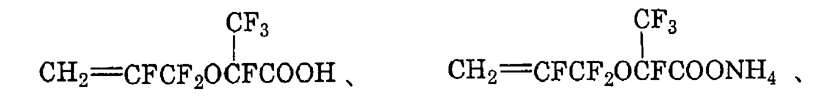 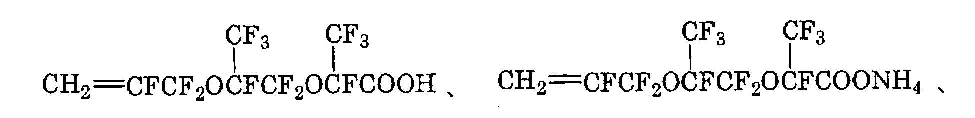 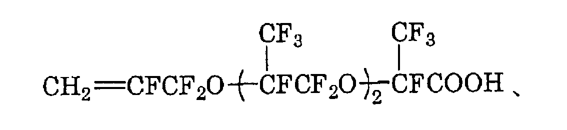 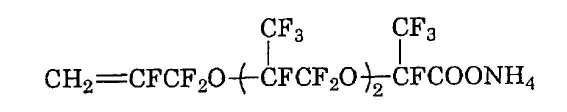 Among them, the following are preferred in view of their little tendency toward remaining as impurities and of their ability to improve the thermal stability of the final product moldings:
CH₂=CFCF₂OCF(CF₃) -COOH,
CH₂=CFCF₂OCF(CF₃)-COONH₄,
CH₂=CFCF₂OCF(CF₃)-CF₂OCF(CF₃)-COOH and
CH₂=CFCF₂OCF(CF₃)-CF₂OCF(CF₃)-COONH₄.

The vinyl group-containing fluorinated compound (VI) is represented by the general formula (VI):

CF₂=CF(CF₂)ₕO-(CF(CF₃)CF₂O)ᵢ-CF(CF₃)-Y (VI)

[wherein h represents an integer of 1 to 6, i represents an integer of 1 to 10 and Y represents - SO₃M or -COOM in which M represents H, NH₄ or an alkali metal].

In the above general formula (VI), the integer h is preferably not greater than 2, more preferably not greater than 1, from the copolymerizability viewpoint, the integer i preferably not greater than 3 from the emulsifier activity viewpoint, the group Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (VI), there may be mentioned, among others, the following: 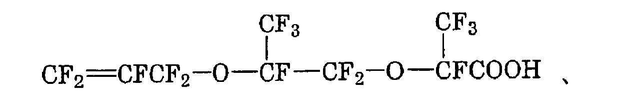 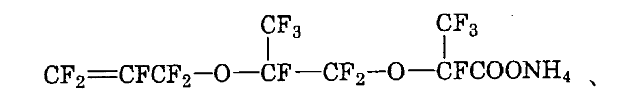 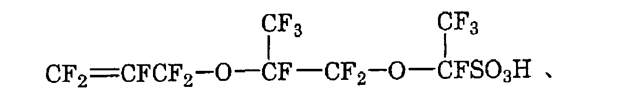 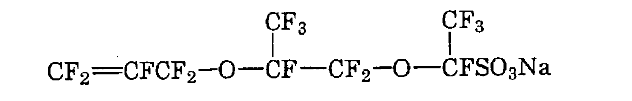 Among them, the following are preferred in view of their little tendency toward remaining as impurities and of their contribution to improvements in thermal stability of the final product moldings:

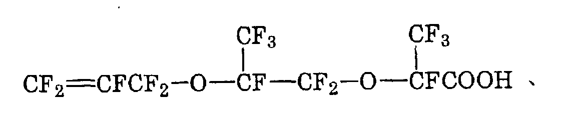

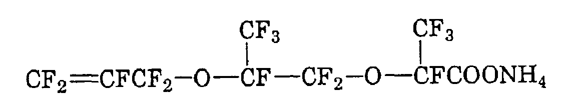

The vinyl group-containing fluorinated compound (VII) is represented by the general formula (VII):

CH₂=CH(CF₂)ₚ₁-Y (VII)

[wherein p1 represents an integer of 1 to 10 and Y represents -SO₃M or -COOM in which M represents H, NH₄ or an alkali metal].

In the above general formula (VII), the integer p1 is preferably not greater than 5, more preferably not greater than 2, from the emulsifying ability viewpoint and Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (VII), there may be mentioned, among others, the following:
CH₂=CH-CF₂CF₂-COOH,
CH₂=CH-CF₂CF₂-COONH₄,
CH₂=CH-CF₂CF₂-SO₃H,
CH₂=CH-CF₂CF₂-SO₃Na,
CH₂=CH-CF₂CF₂CF₂-COOH,
CH₂=CH-CF₂CF₂CF₂-COONH₄,
CH₂=CH-CF₂CF₂CF₂-SO₃H and
CH₂=CH-CF₂CF₂CF₂-SO₃Na .
Among them, CH₂=CH-CF₂CF₂-COONH₄ is preferred from the better dispersion stability viewpoint.

The vinyl group-containing fluorinated compound (VIII) is represented by the general formula (VIII):

CF₂=CFO-(CH₂)_{q}-(CF₂)ₚ₂-Y (VIII)

[wherein q represents an integer of 1 to 4, p2 represents an integer of 1 to 10 and Y represents - SO₃M or -COOM in which M represents H, NH₄ or an alkali metal].

In the above general formula (VIII), the integer q is preferably not greater than 2, more preferably equal to 1. The integer p2 is preferably not greater than 5, more preferably not greater than 2, from the emulsifying ability viewpoint. The group Y is preferably -COOM from the proper water solubility and surfactant activity viewpoint, and M is preferably H or NH₄ from the viewpoint of little tendency toward remaining as an impurity and of improved thermal stability of the final product moldings.

As the vinyl group-containing fluorinated compound (VIII), there may be mentioned, among others, the following:
CF₂=CFO-CH₂CF₂CF₂-COOH,
CF₂=CFO-CH₂CF₂CF₂-COONH₄,
CF₂=CFO-CH₂CF₂CF₂-SO₃H and
CF₂=CFO-CH₂CF₂CF₂-SO₃Na,
Among them, CF₂=CFO-CH₂CF₂CF₂-COONH₄ is preferred from the better dispersion stability viewpoint.

From the good copolymerizability viewpoint, the vinyl group-containing fluorinated emulsifier mentioned above preferably is the above-mentioned vinyl group-containing fluorinated compound (I), vinyl group-containing fluorinated compound (III), vinyl group-containing fluorinated compound (IV), vinyl group-containing fluorinated compound (V), vinyl group-containing fluorinated compound (VI), vinyl group-containing fluorinated compound (VII), and/or vinyl group-containing fluorinated compound (VIII). More preferably, it is the above-mentioned vinyl group-containing fluorinated compound (V) and/or vinyl group-containing fluorinated compound (VI) and, still more preferably, it is the above-mentioned vinyl group-containing fluorinated compound (V).

The above-mentioned vinyl group-containing fluorinated emulsifier particularly preferably is a vinyl group-containing fluorinated compounds represented by the general formula (i):

CH₂=CFCF₂O-(CF(CF₃)CF₂O)ₖ-CF(CF₃)-Y (i)

(wherein k represents an integer of 0 to 3 and Y represents -SO₃M or -COOM in which M represents H, NH₄ or an alkali metal).

In the above general formula (i), k is preferably an integer of 0 to 2, more preferably an integer of 0 or 1, and Y is preferably -COOH or-COONH₄.

The vinyl group-containing fluorinated emulsifier mentioned above may be a mixture of compounds differing in the number of moles of the oxyalkylene group added in each of the general formulas (I) to (VIII) and (i).

The "compounds containing a radical polymerizable unsaturated bond and a hydrophilic group within the molecule" such as the vinyl group-containing fluorinated emulsifiers, the vinyl group-containing fluorinated compounds (I) to (VIII) or vinyl group-containing fluorinated compound (i) constituting the vinyl group-containing fluorinated emulsifiers and the vinyl group-containing fluorinated compounds (1) can be prepared using the methods known in the art.

In the method of producing an elastomeric fluoropolymer of the invention, the vinyl group-containing fluorinated emulsifier is preferably used at addition levels of 1 ppm to 10% by mass relative to the aqueous medium. At levels lower than 1 ppm relative to the aqueous medium, the elastomeric fluoropolymer obtained tends to adhere to the reaction vessel inside in an increased amount, reducing the productivity and, at levels exceeding 10% by mass relative to the aqueous medium, the thermal stability of the product elastomeric fluoropolymer may become poor.

A more preferred lower limit to the level of addition of the vinyl group-containing fluorinated emulsifier is 10 ppm relative to the aqueous medium and a still more preferred lower limit is 50 ppm relative to the aqueous medium. A more preferred upper limit thereto is 5% by mass relative to the aqueous medium, a still more preferred upper limit is 2% by mass relative to the aqueous medium and a most preferred upper limit is 1% by mass relative to the aqueous medium.

The method of producing an elastomeric fluoropolymer of the invention comprises polymerizing a fluoromonomer(s) in the presence of the above-mentioned vinyl group-containing fluorinated emulsifier and, therefore, the emulsion polymerization can be carried out without adding any of those fluorine-containing surfactants or other emulsifiers which have so far been used, and the elastomeric fluoropolymers obtained are excellent in dispersion stability in the aqueous medium and tend to show a high rate of curing.

The method of producing an elastomeric fluoropolymer of the invention comprises polymerizing a fluoromonomer(s) in the presence of a chain transfer agent in addition to the vinyl group-containing fluorinated emulsifier.

The chain transfer agent may comprise one single species or a combination of two or more species.

The chain transfer agent is not particularly restricted but includes those used in the production of elastomeric fluoropolymers, for example alcohols containing 1 to 12 carbon atoms, esters containing 1 to 12 carbon atoms, alkanes containing 1 to 12 carbon atoms, ketones containing 1 to 12 carbon atoms, and mercaptans containing 1 to 12 carbon atoms. The compounds mentioned above may be partially substituted by a fluorine and/or chlorine atom or atoms.

In the present specification, the chain transfer agent mentioned above does not include, within the meaning thereof, such bromine atom-and/or iodine atom-containing saturated aliphatic compounds as perfluorocarbons with one or two fluorine atoms being substituted by a bromine and/or iodine atom or atoms.

The alcohols containing 1 to 12 carbon atoms include, for example, methanol, ethanol, propanol and butanol.

The esters containing 1 to 12 carbon atoms include, for example, methyl acetate, ethyl acetate, butyl acetate, ethyl propionate, dimethyl malonate, diethyl malonate, dimethyl succinate and diethyl succinate.

The alkanes containing 1 to 12 carbon atoms include, for example, methane, ethane, propane, butane, pentane and hexane.

The ketones containing 1 to 12 carbon atoms include, for example, acetone, acetylacetone, methyl ethyl ketone and cyclohexanone.

The mercaptans containing 1 to 12 carbon atoms include, for example, dodecylmercaptan and the like.

As the partially fluorine and/or chlorine-substituted compounds, there may be mentioned, for example, chlorocarbons, chloroform and carbon tetrachloride.

Preferred as the chain transfer agent are saturated hydrocarbons containing 1 to 6 carbon atoms, alcohol containing 1 to 4 carbon atoms, carboxylic acid ester compounds containing 4 to 8 carbon atoms, chlorine-substituted hydrocarbons containing 1 or 2 carbon atoms, ketones containing 3 to 5 carbon atoms, and/or mercaptans containing 10 to 12 carbon atoms.

More preferably, the chain transfer agent is isopentane, isopropanol, diethyl malonate, carbon tetrachloride, acetone, ethyl acetate and/or dodecylmercaptan from the viewpoint of dispersibility in polymerization medium, chain transfer behavior and removability from desired products. Still more preferred are isopentane, diethyl malonate and ethyl acetate, among others, since their chain transfer behavior is appropriate and they cause little decrease in rate of polymerization.

In the method of producing an elastomeric fluoropolymer of the invention, the chain transfer agent is preferably used at addition levels of 0.0001 to 5 parts by mass per 100 parts by mass of the total addition amount of the first monomer and the monomer(s) other than the first monomer. For adjusting the molecular weight and molecular weight distribution of the elastomeric fluoropolymer, the chain transfer agent may be added more preferably in an amount of not smaller than 0.0005 part by mass, still more preferably not smaller than 0.001 part by mass, per 100 parts by mass of the total addition amount mentioned above, and more preferably in an amount of not larger than 1% by mass, still more preferably not larger than 0.1% by mass, per 100 parts by mass of the total addition amount mentioned above.

The method of producing an elastomeric fluoropolymer of the invention comprises polymerizing a fluoromonomer in the presence of the chain transfer agent mentioned above and, therefore, it is possible to inhibit the elastomeric fluoropolymer from increasing in molecular weight due to the polymerization initiator generally added and thereby render the molecular weight appropriate and, further, broaden the molecular weight distribution of the product elastomeric fluoropolymer. Accordingly, the elastomeric fluoropolymer obtained by the method of producing an elastomeric fluoropolymer of the invention are well balanced between the molecular weight and molecular weight distribution, show a high rate of curing in the step of molding/processing, and can give moldings low in permanent compression set.

The method of producing an elastomeric fluoropolymer of the invention comprises polymerizing a fluoromonomer in an aqueous medium.

The term "fluoromonomer" as used herein includes, within the meaning thereof, the first monomer mentioned above and a copolymerizable compound containing at least one fluorine atom, which is optionally added when desired.

The method of producing an elastomeric fluoropolymer of the invention may also comprise polymerizing the fluoromonomer mentioned above together with a fluorine-free monomer added as desired.

As the fluoromonomer and the fluorine-free monomer, there may be mentioned, for example, the same ones as described hereinabove referring to the elastomeric fluoropolymer.

From the viewpoint of the dispersion stability of the product elastomeric fluoropolymer, a preferred lower limit to the total feed of the fluoromonomer and fluorine-free monomer is 10 parts by mass and a more preferred lower limit is 20 parts by mass, per 100 parts by mass of the aqueous medium. From the yield of fluoroelastomer viewpoint, a preferred upper limit is 100 parts by mass and a more preferred upper limit is 80 parts by mass, per 100 parts by mass of the aqueous medium.

The total feed of the fluoromonomer and fluorine-free monomer is the sum total of the amounts to be initially charged at the start of the polymerization reaction and the amounts to be continuously fed during the polymerization reaction.

Among them, the feed of the fluorine-free monomer can be properly selected according to the desired composition of the elastomeric fluoropolymer.

If desired, the above polymerization may be carried out by adding a radical polymerization initiator to the aqueous medium in addition to the vinyl group-containing fluorinated emulsifier, the chain transfer agent, the fluoromonomer and the optional fluorine-free monomer.

Generally used as the radical polymerization initiator are water-soluble inorganic compound peroxides or water-soluble organic compound peroxides, for example persulfates such as ammonium persulfate and potassium persulfate, bissuccinoyl peroxide and bisglutaroyl peroxide. These may be used singly or two or more of them may be used in combination. In carrying out the polymerization within a low temperature range, a redox system initiator is preferably used. Further, so long as the stability of the latex will not be impaired, it is also possible to use a water-insoluble organic peroxide and/or a water-insoluble azo compound either alone or in combination with a water-soluble inorganic compound peroxide or a water-soluble organic compound peroxide.

The level of addition of the radical polymerization initiator can be properly selected according to the composition and yield of the elastomeric fluoropolymer to be produced and to the usages of the fluoromonomer and fluorine-free monomer and so forth. The radical polymerization initiator is preferably added at levels of 0.01 to 0.4 part by mass, more preferably 0.05 to 0.3 part by mass, per 100 parts by mass of the elastomeric fluoropolymer to be obtained.

Furthermore, the above-mentioned polymerization may also be carried out by adding a fluorine-containing surfactant other than the vinyl group-containing fluorinated emulsifier and/or a radical scavenger and/or another additive or other additives.

As the above-mentioned fluorine-containing surfactant, there may be mentioned, for example, surfactants comprising fluorocarboxylic acids represented by the formula:

Z²-(CF₂)ₐₐ-COOH

[wherein Z² represents F or H and aa represents an integer of 3 to 20] and alkali metal salts, ammonium salts, amine salts and quaternary ammonium salts thereof; or comprising fluorocarboxylic acids represented by the formula:

Z³-(CH₂CF₂)_{bb}-COOH

[wherein Z³ represents F or Cl and bb represents an integer of 3 to 13] and alkali metal salts, ammonium salts, amine salts and quaternary ammonium salts thereof; or comprising acidic compounds represented by the formula:

RfO-(CF(CF₃)CF₂O)_{cc}-CF(CF₃)-Z⁴

[wherein Rf represents an perfluoroalkyl group containing 1 to 7 carbon atoms, cc represents an integer of 0 to 10 and Z⁴ represents -COOM or -SO₃M in which M represents H, NH₄ or an alkali metal] .

In carrying out the polymerization, one or two or more species of the above-mentioned fluorine-containing surfactants may be added.

The fluorine-containing surfactant addition level can be suitably selected according to the composition and yield of the elastomeric fluoropolymer to be produced and so forth. However, the above polymerization is preferably carried out in the absence of any fluorine-containing surfactant in view of the fact that the elastomeric fluoropolymer which shows a high rate of curing on the occasion of molding/processing and can be processed into moldings low in permanent compression set can then be obtained.

In the present specification, the term "fluorine-containing surfactant" does not include, within the meaning thereof, the vinyl group-containing fluorinated emulsifier mentioned above.

The polymerization mentioned above may be carried out in the conventional manner of polymerization provided that it is carried out in an aqueous medium in the presence of the above-mentioned vinyl group-containing fluorinated emulsifier and chain transfer agent.

The polymerization mentioned above may be carried out in any of the batchwise, semibatchwise and continuous procedures. Preferably, however, it is carried out in a semibatchwise procedure.

In the above polymerization, additional amounts of the above-mentioned fluoromonomer, fluorine-free monomer, chain transfer agent, polymerization initiator, vinyl group-containing fluorinated emulsifier, fluorine-containing surfactant, and/or radical scavenger and/or other additive(s) may be fed during the polymerization reaction according to the composition and yield of the desired elastomeric fluoropolymer.

Further, by carrying out the above polymerization through the multi-step polymerization process described in International Laid-open Publication WO 00/001741, it is possible to prepare elastomeric fluoropolymers having a desired monomer composition.

The above polymerization is generally carried out while maintaining the temperature within a range of 10 to 120°C. At temperatures lower than 10°C, any effectively high rate of reaction cannot be attained on an industrial scale. At temperatures exceeding 120°C, the reaction pressure necessary for maintaining the polymerization reaction will become too high for the reaction to be maintained.

The above polymerization is generally carried out while maintaining the pressure within a range of 0.5 to 10 MPa. A preferred lower limit to the pressure range is 1.0 MPa and a preferred upper limit to that range is 6.2 MPa.

When the polymerization is carried out in a semibatchwise manner, the desired polymerization pressure can be attained at the initial stage of polymerization by adjusting the monomer gas amount on the occasion of initial feeding. After the start of the polymerization, the pressure is adjusted by adjusting the monomer gas amount to be additionally fed.

When the polymerization is carried out continuously, the desired polymerization pressure is adjusted by adjusting the back pressure in the outlet tube for the elastomeric fluoropolymer dispersion obtained.

If the pressure mentioned above is lower than 0.5 MPa, the monomer concentration in the polymerization reaction system will become too low, hence the rate of reaction cannot arrive at a satisfactory level; as a result, the elastomeric fluoropolymer obtained may fail to have a satisfactorily high molecular weight. At pressure levels exceeding 10 MPa, the cost of the apparatus for maintaining the pressure will rise.

The above polymerization is generally carried for 0.5 to 100 hours.

The elastomeric fluoropolymer obtained from the polymerization mentioned above comprises the first monomer-derived units and other units involved in the copolymerization and, in addition, it comprises emulsifier units derived from the vinyl group-containing fluorinated emulsifier.

The term "emulsifier unit" as used herein means the segment derived from the corresponding vinyl group-containing fluorinated emulsifier and constituting a part of the molecular structure of the elastomeric fluoropolymer.

The above-mentioned emulsifier units now partially constitute the polymer chain of the elastomeric fluoropolymer as a result of addition of the compound constituting the vinyl group-containing fluorinated emulsifier to the polymer chain because of the presence of the vinyl group-containing fluorinated emulsifier in the reaction system in the above-mentioned step of polymerization.

The content of the emulsifier units mentioned above is preferably not lower than 10 ppm but not higher than 10% by mass of the elastomeric fluoropolymer. When the content is lower than 10 ppm, the dispersion stability in the aqueous medium may be inferior as compared with the prior art case where no noncopolymerizable emulsifier is used. At levels exceeding 10% by mass, thermal stability and other physical properties may deteriorate.

A preferred lower limit to the emulsifier unit content is 25 ppm of the elastomeric fluoropolymer, and a more preferred lower limit is 50 ppm. A more preferred upper limit to the emulsifier unit content is 5% by mass and a still more preferred upper limit is 2.5% by mass.

The above-mentioned elastomeric fluoropolymer generally has a Mooney viscosity of 10 to 100 as measured at 100°C. A preferred lower limit to the Mooney viscosity is 30 from the viewpoint of curability or vulcanizability of the moldings obtained, and a preferred upper limit thereto is 80 from the moldability/processability viewpoint.

The Mooney viscosity [ML(1+10)] so referred to herein is the value obtained by carrying out the measurement according to ASTM D 1646.

The amount of the elastomeric fluoropolymer obtained by carrying out the above polymerization is roughly equal to the total monomer amount additionally fed and, generally, the fluoropolymer is obtained in an amount of 10 to 30 parts by mass, preferably 20 to 25 parts by mass, per 100 parts by mass of the aqueous medium. When the elastomeric fluoropolymer content is lower than 10 parts by mass per 100 parts by mass of the aqueous medium, the productivity will be undesirably low and, when it exceeds 30 parts by mass per 100 parts by mass of the aqueous medium, it becomes sometimes difficult for the elastomeric fluoropolymer to be dispersed.

The elastomeric fluoropolymer just after polymerization as obtained by carrying out the polymerization mentioned above generally has an average particle size of 10 to 500 nm and is excellent in dispersion stability.

The elastomeric fluoropolymer obtained by the method of producing an elastomeric fluoropolymer of the invention may be in any form provided that it is the product obtained by the polymerization mentioned above; thus, it may constitute an aqueous emulsion as obtained just after polymerization, or may constitute such an elastomeric fluoropolymer aqueous dispersion as mentioned later herein, or may constitute a kind of gum or crumb as obtained from the above-mentioned aqueous emulsion by coagulation and drying, for instance.

The gum mentioned above consists of small granular lumps of the elastomeric fluoropolymer, and the crumb mentioned above is in the form of an amorphous mass of the elastomeric fluoropolymer as resulting from failure of that polymer to retain the gum form at room temperature and fusion together of the small granular lumps.

The method of producing an elastomeric fluoropolymer of the invention is carried out in the presence of the vinyl group-containing fluorinated emulsifier and the chain transfer agent and, therefore, the molecular weight and molecular weight distribution of the product elastomeric fluoropolymer can be properly adjusted. The prior art methods of producing elastomeric fluoropolymers have problems; namely (1) the dispersion stability of the product elastomeric fluoropolymer becomes low when the polymerization reaction is carried out using a halogen-containing compound as the chain transfer agent and (2) when the fluorine-containing surfactant addition level is low, the product elastomeric fluoropolymer adheres to the reaction vessel inside, leading to decreases in yield. On the contrary, the method of producing an elastomeric fluoropolymer of the invention can further give an elastomeric fluoropolymer showing good dispersion stability and ready moldability/processability even when the polymerization reaction is carried out using such a chain transfer agent as mentioned above.

An elastomeric fluoropolymer aqueous dispersion which comprises a particle comprising an elastomeric fluoropolymer dispersed in an aqueous medium in which the elastomeric fluoropolymer is the one obtained by the above-mentioned method of producing an elastomeric fluoropolymer of the invention also constitutes an aspect of the present invention.

The elastomeric fluoropolymer aqueous dispersion of the invention contains a vinyl group-containing fluorinated emulsifier or is free of such emulsifier.

The elastomeric fluoropolymer aqueous dispersion of the invention can be rendered free of the fluorine-containing, vinyl group containing emulsifier in the aqueous medium since the elastomeric fluoropolymer contains the emulsifier units mentioned above.

The vinyl group-containing fluorinated emulsifier content in the elastomeric fluoropolymer aqueous dispersion of the invention can be reduced to less than 1000 ppm.

The vinyl group-containing fluorinated emulsifier content in the elastomeric fluoropolymer aqueous dispersion of the invention is preferably lower than 100 ppm, more preferably lower than 10 ppm, from the viewpoint of good crosslinkability in the step of molding/processing.

The content of the elastomeric fluoropolymer in the elastomeric fluoropolymer aqueous dispersion of the invention can be adjusted to 10 to 70 parts by mass per 100 parts by mass of the aqueous medium by such a procedure as concentration.

The elastomeric fluoropolymer aqueous dispersion of the invention can be prepared, for example, by subjecting the aqueous emulsion obtained just after completion of the above-mentioned polymerization reaction to coagulation by a conventional method, followed by purification.

The method of purification is not particularly restricted but includes, for example, extraction, ion exchange resin treatment, and ultrafiltration membrane treatment.

The elastomeric fluoropolymer aqueous dispersion of the invention has a vinyl group-containing fluorinated emulsifier content within the range mentioned above and, therefore, can be processed into substantially vinyl group-containing fluorinated emulsifier-free coagulates, compositions, moldings and so forth.

The elastomeric fluoropolymer rubber (gum) or crumb comprising the elastomeric fluoropolymer mentioned above can be rendered substantially free of any fluorine-containing surfactant.

The above-mentioned elastomeric fluoropolymer rubber or crumb can be obtained by subjecting the elastomeric fluoropolymer aqueous dispersion of the invention to coagulation and drying.

The coagulant that can be used in the above coagulation includes aluminum salts such as aluminum sulfate and alum, calcium salts such as calcium sulfate, magnesium salts such as magnesium sulfate, and coagulation aids, for example monovalent cation salts such as sodium chloride and potassium chloride.

The above-mentioned elastomeric fluoropolymer can be compounded into an elastomeric fluoropolymer composition by adding a curing agent, a filler and/or the like

The curing agent may be a polyol, polyamine, organic peroxide, organotin, bis(aminophenol)tetraamine or bis(thioaminophenol), for instance.

The above-mentioned elastomeric fluoropolymer composition, which comprises the elastomeric fluoropolymer mentioned above, is substantially free of the vinyl group-containing fluorinated emulsifier, hence it is excellent in view of ready crosslinkability in the step of molding/processing.

Elastomeric fluoropolymer moldings can be obtained by molding/processing the above-mentioned elastomeric fluoropolymer, the elastomeric fluoropolymer aqueous dispersion of the invention or the above-mentioned elastomeric fluoropolymer rubber of crumb. The method of molding/processing is not particularly restricted but may be the method comprising using the curing agent mentioned above.

The elastomeric fluoropolymer moldings mentioned above, which comprises the above-mentioned elastomeric fluoropolymer, are low in permanent compression set, excellent in mechanical strength and are suited for use as seals, electric wire coverings, tubes, laminates and so forth, in particular as semiconductor manufacturing parts and automotive parts, among others.

### EFFECTS OF THE INVENTION

The method of producing an elastomeric fluoropolymer of the invention, which has the constitution described hereinabove, is simple and easy to apply, and the elastomeric fluoropolymer obtained shows the following excellent characteristics: a high rate of curing on the occasion of molding/processing and a high crosslink density and, further, moldings obtained therefrom are low in permanent compression set.

### BEST MODES FOR CARRYING OUT THE INVENTION

The following examples illustrate the invention in further detail. These examples are, however, by no means limitative of the scope of the invention.

The measurements made in the Examples and Comparative Examples were carried out in the following manner.
(1) Solid matter concentration: The aqueous dispersion obtained was dried at 150°C for 1 hour and the solid matter concentration was calculated based on the loss in mass on that occasion.
   (Notes: Used in the measurements (2), (3), (4) and (6) mentioned below were the washed and dried coagulation products obtained through the steps of coagulation, washing and drying.)
(2) Mooney viscosity [ML(1+10)]: Measured according to ASTM D 1646.
(3) Composition of the elastomeric fluoropolymer: Calculated based on the values obtained by F¹⁹ NMR spectrometry.
(4) Vinyl group-containing fluorinated emulsifier concentration: The washed and dried coagulation product (1 g) derived from each aqueous emulsion was dissolved in 10 g of acetone, this polymer solution was dispersed in 30 g of deionized water, the solid matter was removed and the reactive emulsifier remaining unreacted in the aqueous acetone solution was determined by liquid chromatography/tandem mass spectrometry (LC/MS/MS) (detection limit: 1 ppb).
   In the above LC/MS/MS, Waters 2695 Separation module, Micromass Quattro micro TM API, and Waters 2996 Photodiode Array detector (all being products of Waters) were used. In the above liquid chromatography, Waters Atlantis dC-18 column (30 mm x 2.1 mm i.d.) was used and the elution was carried out with 0.01 M ammonium acetate:acetonitrile (55:45 v:v) at a flow rate of 0.15 ml/minute. In the tandem mass spectrometry, negative electrospray (ESP⁻) ionization was carried out.
(5) Average particle diameter: The dynamic light scattering method was employed.
(6) Iodine atom content: Determined by carrying out elemental analysis.
(7) Vinyl group-containing fluorinated emulsifier concentration in the elastomeric fluoropolymer aqueous emulsion: The aqueous emulsion was mixed with an equal volume of methanol, the mixture was subjected to Soxhlet extraction and the concentration in question was determined by HPLC assaying (detection limit: 1 ppm).

### Example 1

A 2-liter stainless steel pressure vessel equipped with a stirrer was charged with 1000 ml of deionized water, 2.0 g of ammonium perfluoro(9,9-dihydro-2,5-bistrifluoromethyl-3,6-dioxa)-8-nonenoate [RS-1] as a vinyl group-containing fluorinated emulsifier and 5 g of diethyl malonate as a chain transfer agent and, after repeated pressurization with nitrogen and vacuum degassing, 430 g of HFP was introduced into the vessel at a reduced pressure of -700 mmHg, followed by introduction of a fluoromonomer mixture composed of VDF/HFP = 95.5/4.5 mole percent (hereinafter such fluoromonomer mixture is referred to as "mixed monomer") was introduced into the vessel to thereby raise the pressure to 6 MPa at 80°C. Then, 13 g of a 2% (by mass) aqueous solution of ammonium persulfate was introduced under pressure, upon which the pressure was found to fall. Therefore, a mixed monomer composed of VDF/HFP = 95.5/4.5 mole percent was then continuously added to maintain the vessel inside pressure at 6 MPa. The reaction was continued in this manner for 3 hours to give 1400 g of an aqueous emulsion.

The aqueous emulsion obtained had a solid matter concentration of 28.8% by mass and an average particle diameter of 148 nm; no unreacted RS-1 was detected (detection limit: 1 ppm).

The desired elastomeric fluoropolymer was recovered by adding hydrochloric acid to the aqueous emulsion obtained to cause coagulation, followed by washing and further followed by 12 hours of drying at 120°C.

The elastomeric fluoropolymer obtained had a composition of VDF/HFP/RS-1 = 77.3/22.6/0.1 mole percent (59.2/40.4/0.4% by mass) and a Mooney viscosity at 100°C of 52.5.

### Example 2

The polymerization was carried out for 3 hours in the same manner as in Example 1 except that 0.07 g of ammonium perfluoro(6,6-dihydro-2-trifluoromethyl-3-oxa)-5-hexenoate [RS-2] was used as the vinyl group-containing fluorinated emulsifier, whereby 1370 g of an aqueous emulsion was obtained.

This aqueous emulsion had a solid matter concentration of 28.6% and an average particle diameter of 130 nm.

The washed and dried coagulation product obtained from the aqueous emulsion through the same steps of coagulation, washing and drying as in the Example 1 had a composition of VDF/HFP = 78.4/21.6 mole percent (60.8/39.2% by mass) and a Mooney viscosity at 100°C of 63.1.

### Example 3

The polymerization was carried out for 3.5 hours in the same manner as in Example 1 except that 0.10 g of ammonium perfluoro(5-trifluoromethyl-4,7-dioxa)-8-nonenoate [RS-3] was used as the vinyl group-containing fluorinated emulsifier, whereby 1384 g of an aqueous emulsion was obtained. This aqueous emulsion had a solid matter concentration of 27.8% and an average particle diameter of 237 nm. The washed and dried coagulation product (elastomeric fluoropolymer) obtained through the same steps of coagulation, washing and drying as in the Example 1 had a composition of VDF/HFP = 77.6/22.4 mole percent (59.6/40.4% by mass) and a Mooney viscosity at 100°C of 62.6.

### Comparative Example 1

The reaction was carried out for 2.8 hours in the same manner as in Example 1 except that ammonium perfluorooctanoate [APFO] was used in lieu of RS-1; 1245 g of an aqueous emulsion was obtained.

The aqueous emulsion obtained had a solid matter concentration of 27.7% by mass and an average particle diameter of 234 nm.

The washed and dried coagulation product obtained through the same steps of coagulation, washing and drying as in Example 1 had a composition of VDF/HFP = 77.9/22.1 mole percen and a Mooney viscosity at 100°C of 46.

### Test Example 1

The ingredients specified in Table 1 were incorporated in each of the elastomeric fluorocopolymer obtained in Example 1 and the fluorocopolymer obtained in Comparative Example 1, and each mixture was kneaded in the conventional manner on a rubber roll. The thus-prepared uniform curable composition was evaluated for curability on a curastometer. The composition was cured under the conditions specified in Table 1 and the moldings were subjected to physical property measurements.

As for the test conditions, the tensile strength, elongation, tensile stress and permanent compression set were measured according to JIS K 6301, and the Shore hardness was measured according to ASTM D 2240. The curability was measured at 170°C using a curastometer (JSRII).

The results are shown in Table 1.

**Table 1**

| | Example 1 | Comp. Ex. 1 |
|---|---|---|
| Copolymer (parts by mass) | 100 | 100 |
| Bisphenol AF (parts by mass) | 2.0 | 2.0 |
| BTPPC (parts by mass) | 0.6 | 0.6 |
| Carbon black (parts by mass) | 20 | 20 |
| Magnesium oxide (parts by mass) | 3 | 3 |
| Calcium hydroxide (parts by mass) | 6 | 6 |
| Press curing | 170°C x 15 min | 170°C x 15 min |
| Oven curing | 230°C x 24 hrs | 230°C x 24 hrs |
| Tensile strength (MPa) | 15 | 14 |
| Elongation (%) | 240 | 245 |
| Tensile stress M₁₀₀ (MPa) | 4.6 | 4.6 |
| Permanent compression set (%) | 10 | 15 |
| Shore hardness | 78 | 79 |

| Curability | | |
|---|---|---|
| T₁₀ | 4.3 | 5.2 |
| T₉₀ | 5.4 | 6.8 |
| µ | 3.01 | 2.71 |

In Table 1, T₁₀ denotes "induction time", T₉₀ "optimum cure time", and p "degree of curing".

The elastomeric fluorocopolymer obtained in Example 1 showed higher cure rates (T₁₀, T₉₀) as compared with the fluorocopolymer obtained in Comparative Example 1, and gave cured moldings showing better characteristics, typically smaller permanent compression set.

### INDUSTRIAL APPLICABILITY

The method of producing an elastomeric fluoropolymer of the invention, which has the constitution described hereinabove, is simple and easy to follow and the elastomeric fluoropolymer obtained show fast cure rates and high crosslink densities on the occasion of molding/processing and, further, the moldings obtained therefrom show good characteristics, typically small permanent compression set.

## Claims

1. A method of producing an elastomeric fluoropolymer comprising polymerizing a fluoromonomer in an aqueous medium in the presence of a vinyl group-containing fluorinated emulsifier and a chain transfer agent,
wherein said vinyl group-containing fluorinated emulsifier is a compound having a radical polymerizable unsaturated bond and a hydrophilic group within the molecule thereof.

2. The method of producing an elastomeric fluoropolymer according to Claim 1,
wherein the compound having the radical polymerizable unsaturated bond and the hydrophilic group within the molecule thereof is a vinyl group-containing fluorinated compound (1) represented by the general formula (1):
CR¹R²=CR³(CR⁴R⁵)ⱼ-(O)ₖ-R-Y (1)
[wherein R¹, R², R³, R⁴ and R⁵ are the same or different and each represents a perfluoroalkyl group (which may optionally be substituted by H), H, F, Cl, Br or I, R represents a straight or branched fluoroalkylene group resulting from substitution of part or all of H atoms of the corresponding alkylene group by F, which may contain oxygen atom in the main chain thereof, j represents an integer of 0 to 6, k represents an integer of 0 or 1, and Y represents a hydrophilic group].

3. A method of producing an elastomeric fluoropolymer comprising polymerizing a fluoromonomer in an aqueous medium in the presence of a vinyl group-containing fluorinated emulsifier and a chain transfer agent,
wherein said vinyl group-containing fluorinated emulsifier is a vinyl group-containing fluorinated compound (I) represented by the general formula (I):
CF₂=CF-(CF₂)ₐ-Y (I)
[wherein a represents an integer of 1 to 10 and Y represents -SO₃M or -COOM in which M represents H, NH₄ or an alkali metal],
a vinyl group-containing fluorinated compound (II) represented by the general formula (II):
CF₂=CF-(CF₂C(CF₃)F)_{b}-Y (II)
[wherein b represents an integer of 1 to 5 and Y represents -SO₃M or -COOM in which M represents H, NH₄ or an alkali metal],
a vinyl group-containing fluorinated compound (III) represented by the general formula (III):
CF₂=CFO-(CF₂)_{c}-Y (III)
[wherein c represents an integer of 1 to 10 and Y represents -SO₃M or -COOM in which M represents H, NH₄ or an alkali metal],
a vinyl group-containing fluorinated compound (IV) represented by the general formula (IV):
CF₂=CF(CF₂)_{d}-O-(CF₂CFXO)ₑ-(CF₂)_{f}-Y (IV)
[wherein X represents -F or -CF₃, d represents an integer of 0 to 2, e represents an integer of 1 to 10, f represents an integer of 1 to 3 and Y represents -SO₃M or -COOM in which M represents H, NH₄ or an alkali metal],
a vinyl group-containing fluorinated compound (V) represented by the general formula (V):
CH₂=CFCF₂O-(CF(CF₃)CF₂O)_{g}-CF(CF₃)-Y (V)
[wherein g represents an integer of 0 to 10 and Y represents -SO₃M or -COOM in which M represents H, NH₄ or an alkali metal],
a vinyl group-containing fluorinated compound (VI) represented by the general formula (VI):
CF₂=CF(CF₂)ₕO-(CF(CF₃)CF₂O)ᵢ-CF(CF₃)-Y (VI)
[wherein h represents an integer of 1 to 6, i represents an integer of 1 to 10 and Y represents - SO₃M or -COOM in which M represents H, NH₄ or an alkali metal],
a vinyl group-containing fluorinated compound (VII) represented by the general formula (VII):
CH₂=CH(CF₂)ₚ₁-Y (VII)
[wherein p1 represents an integer of 1 to 10 and Y represents -SO₃M or -COOM in which M represents H, NH₄ or an alkali metal] and/or
a vinyl group-containing fluorinated compound (VIII) represented by the general formula (VIII):
CF₂=CFO-(CH₂)_{q}-(CF₂)ₚ₂-Y (VIII)
[wherein q represents an integer of 1 to 4, p2 represents an integer of 1 to 10 and Y represents - SO₃M or -COOM in which M represents H, NH₄ or an alkali metal].

4. The method of producing an elastomeric fluoropolymer according to Claim 1, 2 or 3,
wherein the elastomeric fluoropolymer is a vinylidene fluoride-based copolymer.

5. The method of producing an elastomeric fluoropolymer according to Claim 1, 2 or 3,
wherein the elastomeric fluoropolymer is a tetrafluoroethylene/propylene-based copolymer.

6. The method of producing an elastomeric fluoropolymer accoding to Claim 1, 2 or 3,
wherein the elastomeric fluoropolymer is a tetrafluoroethylene/perfluoro vinyl ether-based copolymer.

7. The method of producing an elastomeric fluoropolymer according to Claim 3, 4, 5 or 6,
wherein the vinyl group-containing fluorinated emulsifier is the vinyl group-containing fluorinated compound (I), the vinyl group-containing fluorinated compound (III), the vinyl group-containing fluorinated compound (IV), the vinyl group-containing fluorinated compound (V), the vinyl group-containing fluorinated compound (VI), the vinyl group-containing fluorinated compound (VII) and/or the vinyl group-containing fluorinated compound (VIII).

8. The method of producing an elastomeric fluoropolymer according to Claim 7,
wherein the vinyl group-containing fluorinated emulsifier is a vinyl group-containing fluorinated compound (i) represented by the general formula (i) :
CH₂=CFCF₂O-(CF(CF₃)CF₂O)ₖ-CF(CF₃)-Y (i)
[wherein k represents an integer of 0 to 3 and Y represents -SO₃M or -COOM in which M represents H, NH₄ or an alkali metal].

9. The method of producing an elastomeric fluoropolymer according to Claim 1, 2, 3, 4, 5, 6, 7 or 8,
wherein the vinyl group-containing fluorinated emulsifier is used at an addition level of not lower than 1 ppm but not higher than 10% by mass relative to the aqueous medium.

10. The method of producing an elastomeric fluoropolymer according to Claim 1, 2, 3, 4, 5, 6, 7, 8 or 9,
wherein the chain transfer agent is a saturated hydrocarbon containing 1 to 6 carbon atoms, an alcohol containing 1 to 4 carbon atoms, a carboxylic acid ester compound containing 4 to 8 carbon atoms, a chlorine-substituted hydrocarbon containing 1 or 2 carbon atoms, a ketone containing 3 to 5 carbon atoms or a mercaptan containing 10 to 12 carbon atoms.

11. The method of producing an elastomeric fluoropolymer according to Claim 1, 2, 3, 4, 5, 6, 7, 8, 9 or 10,
wherein the polymerization of the fluoromonomer is carried out in the absence of any fluorine-containing surfactant.

12. An elastomeric fluoropolymer aqueous dispersion which comprises a particle comprising an elastomeric fluoropolymer dispersed in an aqueous medium,
wherein said elastomeric fluoropolymer is an elastomeric fluoropolymer produced by the method according to Claim 1, 2, 3, 4, 5, 6, 7, 8, 9, 10 or 11,
said elastomeric fluoropolymer aqueous dispersion contains a vinyl group-containing fluorinated emulsifier or does not contain any vinyl group-containing fluorinated emulsifier and
the content of said vinyl group-containing fluorinated emulsifier is lower than 1000 ppm relative to said elastomeric fluoropolymer aqueous dispersion.
